(19) Europäisches Patentamt
European Patent Office
Office européen des brevets

(11) **EP 1 852 474 A2**

(12) **EUROPEAN PATENT APPLICATION**

(43) Date of publication:
**07.11.2007 Bulletin 2007/45**

(21) Application number: **07114289.7**

(22) Date of filing: **17.11.2003**

(51) Int Cl.:
*C09C 1/56* (2006.01)     *C08K 3/04* (2006.01)
*C08K 3/08* (2006.01)

(84) Designated Contracting States:
**AT BE BG CH CY CZ DE DK EE ES FI FR GB GR HU IE IT LI LU MC NL PT RO SE SI SK TR**

(30) Priority: **15.11.2002 DE 10253399**

(62) Document number(s) of the earlier application(s) in accordance with Art. 76 EPC:
**03775364.7 / 1 567 602**

(71) Applicant: **Timcal S.A.**
**6743 Bodio (CH)**

(72) Inventors:
 • **Probst, Nicolas**
 **1082 Bruxelles (BE)**
 • **Grivei, Eusebiu**
 **1310 Bruxelles (BE)**

• **Minet, Philippe**
 **1050 Bruxelles (BE)**
• **Fockedey, Etienne**
 **1435 Bruxelles (BE)**
• **Van Lierde, André**
 **1180 Bruxelles (BE)**

(74) Representative: **Pohlman, Sandra M.**
 **df-mp**
 **Fünf Höfe**
 **Theatinerstrasse 16**
 **80333 München (DE)**

Remarks:
This application was filed on 14 - 08 - 2007 as a divisional application to the application mentioned under INID code 62.

(54) **Carbon black compositions and their applications**

(57)     A carbon black composition of carbon black coated with nickel, iron, or cobalt, blends of such metal doped carbon black with thermoplastic or rubber as well as applications of the metal coated carbon black are disclosed. The material has ferromagnetic properties and allows applications in materials influenced by magnetic and/or electric, and/or electromagnetic fields. The other application is for use in carbon black reactors as a catalyst or nucleus for new production of nanostructures of carbon black, in particular carbon nanotubes.

EP 1 852 474 A2

## Description

The present invention relates to carbon black compositions. Furthermore, the invention relates to processes to make such carbon black compositions. A further subject matter of this invention consists in blends of carbon black compositions with various polymers. The invention also relates to the use of the carbon black compositions of this invention in a variety of applications.

Carbon black has been coated with platinum for fuel cell applications. Reference is made to the US patents 4,447,506, 4,137,373, 5,759,944. In part these references also disclose the simultaneous use of platinum nickel alloys as well as platinum nickel gold alloys in conjunction with carbon black for the fuel cell catalytic application.

The nickel is used to modify the platinum crystal lattice dimensions, see e.g. US patent 5,759,944 column 4, line 51.

In many applications finely divided metal is used. Carbon black is a known inert material used as pigment, reinforcing material for rubber, filler in polymers. In addition, carbon black is used as a carbon source in processors for producing other carbon materials including nanometer carbon such as carbon nanotubes.

In accordance with this invention, novel carbon black metal compositions or respectively carbon black coated with metal are provided. These novel carbon black compositions have a variety of applications which can be divided into two groups, namely

    a. applications in which the metallic and/or magnetic properties of the metal coating the carbon black is utilized;

    b. applications in which the coated carbon black serves as a source of the metal in a reaction.

The term coated is not to be understood as limited to a continuous coating; rather, it refers to any connection of the metal component to the carbon black.

The problem solved in accordance with this invention is broadly to provide a carrier for metal to be introduced either into polymer matrices in order to provide modification to the polymer properties or into reaction environments in which the metals function as reaction stimulating nuclei or seeds or catalytic particles.

This problem in its most general form is solved by the claimed carbon black compositions. Preferred further embodiments are contained in the dependent claims as well as in the claims relating to applications and blends of the carbon black compositions. Furthermore, the claimed processes for producing the carbon black composition constitute an embodiment of the invention.

A first embodiment of this invention is a carbon black composition consisting essentially of carbon black and a metal component selected from the group consisting of

$$\text{Ni, Fe, Co (nickel, iron, cobalt).}$$

The carbon black composition of this invention in accordance with this embodiment can also be characterized as comprising carbon black and the metal component listed with the proviso that in the case of the metal component being nickel, iron or cobalt the metal component is substantially free of platinum, preferably contains significantly less than 1 weight percent and in particular less than 0.1 weight percent based on the metal component as 100 weight percent, of platinum.

In one embodiment, the invention encompasses carbon black doped with ferromagnetic material. The preferred ferromagnetic material are ferromagnetic crystals of one or more of the metals Ni, Co, Fe.

The metal component listed above under a. is one which contributes ferromagnetic properties to the carbon black composition. The ferromagnetic properties of the carbon black composition and of blends containing this carbon black composition can be determined by ASTM A341/A34/M-00.

The preferred carbon black composition contains more than 1 weight percent of the metal component. In particular it is characterized by containing more than 5, most preferably 30 to 85 weight percent of metal component in the composition wherein 100 weight percent is based on the carbon black and the metal component together.

The metal component in the preferred embodiment consists of over 90, in particular over 99 weight percent of nickel, iron, and/or cobalt.

The carbon black and the metal component are bonded, the bonding nature being not yet finally clarified. The bonding is, however, significant enough mechanically to prevent a substantial separation of carbon black and the metal component during the regular applications for instance in a mixer (internal or continuous, as used in the rubber and plastic industry) or a compactor or other mechanical blending devices, or during an ultrasonic dispersion.

A further aspect of this invention relates to a process for producing a carbon black composition of this invention. In accordance with the first embodiment of this process, the process comprises

a. impregnating carbon black with a compound (or compounds) of the metal composition mentioned above, and

b. drying the carbon black/metal composition and reducing the metal compound(s). The drying and reducing steps are preferably carried out by first drying and thereafter reducing. The reducing step is carried out by contacting the impregnated carbon black with a reducing agent, in particular hydrogen under elevated temperature. Other reducing agents can also be used. Examples for such other reducing agents are hydrazyne or sodium hypophosphite.

The impregnation can be done in accordance with this invention by either contacting the carbon black in an aqueous slurry with a metal compound or metal compounds present in the slurrying liquid. Examples for such metal compounds for the metal nickel are

|  | Solubility (g/l) | Concentration of nickel at the saturation (g/l) |
|---|---|---|
| $NiCl_2.6H_2O$ | 2540 | 620 |
| $NiSO_4.7H_2O$ | 750 | 150 |
| $Ni(NO_3)_2.6H_2O$ | 2385 | 480 |
| $(CH_3COO)_2Ni.4H_2O$ | not available | 100 |

An increased solubility will allow to depose sufficient nickel on the carbon black structure. In that sense, the nickel compounds with high solubility are the preferred ones for the impregnation step of this type. The drying method (spin flash, infrared, solvent displacement), allows the control of the deposit morphology. The nickel compounds must be reducible to the nickel metal under conditions which do not significantly change the carbon black structure.

In accordance with a yet further more specific embodiment of this invention the impregnation is carried out by a precipitation technique. Under this embodiment the carbon black is contacted preferably in a slurry with a nickel compound which does, however, not sufficiently settle on the carbon black but requires a precipitation step. In accordance with this step the slurry is contacted with a compound which causes a conversion of the nickel compound to another nickel compound which is no longer soluble and will as such settle on the slurried carbon black particles.

Examples for this procedure include the following in accordance with the invention:

Nickel compounds which can be used for this process include

nickel chloride

nickel carbonate

nickel acetate

nickel sulfate

Precipitation agents which can be used for this process include

ammonia

sodium carbonate

potassium hydroxide

urea

sodium hydroxide

Other metal compounds which would be useful for forming metal compound crystals on the carbon black surface are:

Cobalt acetate, Ni acetate., yttrium acetate, cobalt nitrate.

The impregnated carbon black particles also have to be dried and in accordance with the preferred embodiment washed such as to remove all detrimental ingredients. As such for instance sodium chloride as well as alkali metal ions or halogen ions can be removed.

The third possibility here seen within the generic term of impregnation consists in a crystallization. Under this method metal compounds such as compounds of nickel are allowed to crystallize from a solution, within which the carbon black particles are suspended, onto those particles. The advantage of this method is that a relatively high metal content is achievable, even with salts having a low solubility.

The crystallization in accordance with a preferred example can be carried out in the case of nickel using a solution of an acetate of nickel tetrahydrate. Crystals of nickel acetate $* 4\, H_2O$ are not present after a thermal drying step.

The carbon black particles impregnated with the metal compound(s) in accordance with either the regular impregnation procedure, or the specific precipitation procedure or the specific crystal growth procedure are then subjected to a reduction step. In the preferred embodiment this reduction is carried out by contacting the dried impregnated carbon black particles with hydrogen under elevated temperatures.

In accordance with a yet further embodiment, the invention comprises a process to produce the carbon black compositions of this invention. In this process, the carbon black particles are subjected to one or more electroless plating steps after the carbon black has been treated to render its surface capable for electroless plating. In particular, the carbon black may have been subjected to implanting seeds or catalytic sites on its surface. Typical active sites are obtained by the following chemicals:

- $HNO_3$, peroxides, $O_2$, $O_3$, and other strong oxidants;

- $SnCl_2$, $PtCl_{4(6)}$.

Typical electroless plating conditions include as examples contacting solutions with the following ingredients showing the temperatures of use:

**Method 1**

| $NiCl_2$ | 32 g/l | Na Hydrogenocitrate | 11.7 g/l | 90° |
| $NiSO_y$ | 13 g/l | $NaHPO_3$ | 73 g/l | 90° |
| $Pb(NO_3)_2$ | 2.7 g/l | $NH_4Cl$ | 100 g/l | 90° |

**Method 2**

0.6 M Ni acetate or $NiOH + H_2SO_y$ in ethylene glycol 185 - 194°C

It is possible in accordance with one aspect of the invention to concentrate the overall metal content of the carbon black compositions by separating the carbon black composition into two fractions differing by their response to a magnetic field. This separation is preferably done by passing the carbon black composition particles through a magnetic field in which carbon black composition particles with different metal components having magnetic properties are separated so that at least two different fractions can be recovered.

A further embodiment of this invention relates to a blend of polymer and the carbon black compositions in accordance with this invention. Any polymer can be used, for example a rubber or a thermoplastic polymer, in particular an olefin polymer, more specifically an ethylene - or propylene polymer or copolymer. Other thermoplastic polymers include poly carbonates, ABS, polyamides, polyoxy methylene.

A particularly interesting embodiment of these blends in accordance with this invention is one which comprises rubber and the carbon black composition of this invention. In such a blend the carbon black fulfils its reinforcing or cross-linknng function on the rubber while at the same time the metal is introduced into the rubber changing the properties of the rubber. If in accordance with a yet further embodiment of this invention, the metal composition has magnetic, in particular ferromagnetic properties, mechanical properties, rheological and viscoelastic properties of the rubber can be adjusted and/or switched in a magnetic field.

In these blends the carbon black content is preferably 1 to 60 weight percent, based on the polymer and the carbon black (excluding the metal content) as 100 weight percent. The carbon black content depends on the type of the carbon black coated and the overall composition of the composites. Furthermore, the invention resides in the use of the carbon black compositions herein defined and claimed in various applications.

In a first embodiment the applications relate to the use of the carbon black compositions in the hot gas phase of a carbon converting furnace. By injecting these carbon black composition particles into the hot gas phase mentioned it is possible to very finely and in a very controlled manner introduce metal on a totally compatible carrier, namely the carbon black which works also as a further carbon source in such a reactor. In particular, the carbon black compositions are used in a nanometer carbon forming reactor, specifically in one that is used for producing nanotubes. In fact, the carbon black composition in accordance with this invention can be utilized as the sole feedstock for the production of such nanotubes by injecting these carbon black composition particles into the furnace, in particular into the arc itself, wherein a vaporization occurs and due to the presence of the metal, preferably nickel or yttrium, is condensed at least in part to form a carbon nanotube shaped material.

For this application it is preferred to employ carbon black compositions which contain 0.5 to 60 weight percent metal component, in particular nickel, cobalt or yttrium.

A yet further use of the carbon black compositions of this invention involves the use of the herein claimed blends of the carbon black composition with polymers. Such materials in the form of switching elements can be subjected to switching in a magnetic field, e.g. to open or close a valve. The latter can be of particular interest in the technology of blood vessel valves, particular heart valves.

Another application of the carbon black composition incorporated in blends, particularly in rubber blends involve the switching of the magnetization of the metal components in a magnetic field. By this procedure the rheological and viscoelastic properties of e.g. rubber or thermoplastic polymer materials can be changed by simply applying or switching of a magnetic field.

Further applications of the carbon black coated with metal and preferred uses of this metal doped coated black in accordance with the invention include the following:

An EMI shielding. In particular this EMI shielding can be desirable and uses in accordance with the invention as well as products in accordance with the invention include the following:

- Shielding boxes. These can be made from or contain film or foil of polymer with the carbon black coated with metals in accordance with the invention.

- Packaging materials, in particular for packaging sensible electronic materials. These packaging materials can comprise or consist essentially of film of polymer material with the middle coated carbon black in accordance with the invention.

- Adhesives; these would again contain the metal coated carbon black to provide these adhesives not only with a staining capability but also with specific electrical and/or magnetic properties.

- Fibers containing the metal coated carbon black of this invention, is in particular cloth comprising such fibers.

- Coatings made from a carrier material and the metal coated carbon black of the invention.

**Magneto-rheology and magneto-viscoelastic applications**

- Dampers; shock absorbers

- vibration control of devices, in particular medical devices and flight control devices

- devices for seismic control of structures

- smart prosthetics

- magnetic suspension control, e.g. for cars, airplanes, helicopters

- sensors.

**Magnetic applications**

- Ferromagnetic rubber and plastics, i.e. flexible ferromagnetic materials

- elements of smart motors (heart prosthesis)

- magnetic memories, tapes and coatings.

Precursors or catalysts for carbon nanostructures, particularly carbon nanotube productions.

Further preferred embodiments and features and details of this invention will become apparent from the following description of examples and the drawings in which;

Figure 1 shows a graph of the nickel content as a function of the nickel concentration and the impregnation solution before reduction.

Figure 2 shows a TEM of a nickel doped carbon black particle.

Figure 3 shows an x-ray diffraction spectrum of the carbon black after the deposition of nickel acetate as a nickel precursor by crystallization.

Figure 4 shows an SEM of a carbon black particle with a ferromagnetic nickel coating.

Figure 5 shows a graphic representation of the attenuation of a polypropylene sample containing metal doped carbon black

The carbon blacks.

For this invention in principle all types of carbon blacks are useable from regular carbon black, (specifically from the following processes: MMM process, furnace, channel, thermal, lamp, acetylene, gasification, plasma), to nano particle size black. The graphite carbon can be considered as well as any carbon structure. The black chosen as the base material onto which the metal is coated depends on the application of the product. In the case of applications of the coated carbon black in rubber the carbon black used will be one which contributes the desired reinforcement or cross-linking to the rubber. In the case of a shielding the carbon black will be selected under criteria of optimizing the shielding properties as well as the processing.

For specific applications such as the use of the doped carbon black in switching elements or for modifying rheological and viscoelastic properties of materials under the influence of a magnetic field, the carbon black will be chosen in view of this application.

For the various applications the following ranges of carbon blacks and their properties are presently preferred:

| Application | Nitrogen specific surface area ($m^2/g$) ASTM D4820 | DBP absorption (ml/100g) ASTM D2414 |
|---|---|---|
| Rubber reinforcing applications | 35-150 | 60-200 |
| Shielding applications | 35-1600 | 100-700 |
| Magnetic switching elements | 5-150 | 30-200 |
| Magneto rheological properties applications. | 5-150 | 30-200 |
| Catalyst carrier for specialty carbon black production, in particular nanotubes | 5-150 | 30-200 |

For the following examples two commercially available carbon blacks, namely ENSACO 250 and ENSACO 350 obtained from Erachem Comilog have been used. These carbon blacks have the following properties:

|  | Ensaco 250 gr | Ensaco 350 gr |
|---|---|---|
| Nitrogen specific surface area ASTM D4820 | ≈65 m$^2$/gr | ≈ 800 m$^2$/gr |
| Pour density ASTM D1513 | ≈ 190 kg /dm$^3$ | ≈ 140 kg /dm$^3$ |
| pH ASTM D1512 | 11 | 11 |

Example 1

Carbon black-nickel by impregnation-reduction.

Both ENSACO 250 and ENSACO 350 were impregnated with nickel. The impregnation was done by stirring 60 g of the carbon black suspended in 600 ml of a nickel solution containing nickel in various concentrations; 10 ml of acetone were added at the beginning of the slurrying in order to speed up the dispersion. The pulping of the carbon black was carried at surrounding temperature when the solubility of the salt used was sufficient. In order to obtain more highly concentrated solutions a working temperature of up to 80°C was used. At the end of the pulping the carbon black and the impregnation solution were separated by filtration using a paper or polypropylene filter. The carbon black was then dried in an oven at 100°C during 15 hours.

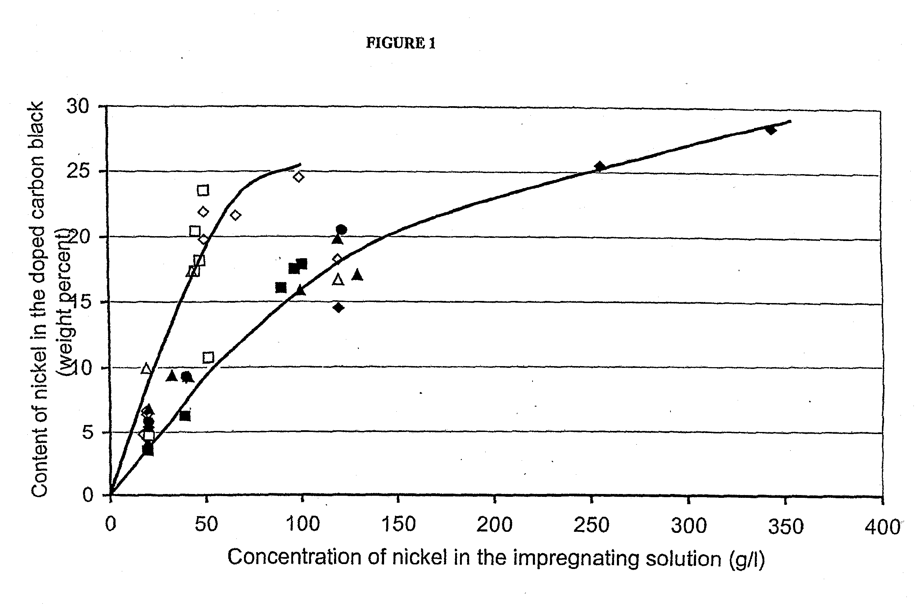

The nickel content (before the production step) of the coated carbon black is shown in Figure 1. This Figure also shows the quantity of nickel used in the impregnation solution. In Figure 1 the values represented by

a square relate to a nickel acetate-water solution,
a diamond relate to a nickel chloride-water solution,
a triangle relate to a nickel acetate-ethanol solution,
a circle relate to nickel chloride-ethanol solution.

The solid symbols relate to ENSACO 250 as the carbon black, while the empty symbols relate to ENSACO 350.

The impregnated carbon black was dried so that a carbon black-nickel precursor composition was obtained. In addition to drying in a regular oven, flash evaporation can also be considered as one of the means of separating the liquid from the solid material.

In the heating period, the atmosphere is kept inert by N$_2$ flow

The reductions were carried out at a temperature of 500°C respectively 600°C for durations of between 2.2 and 41 hours. The hydrogen flow was between 20 and 40 ml/min.

The dried material was then subjected to a reduction step. In principle all techniques known in the art to reduce nickel compounds to nickel metal can be employed. Presently preferred is a reduction with hydrogen, preferably at elevated temperatures, also a reduction with hydrazine is possible. The preferred temperature range for the hydrogen reduction is 300 to 610°C and for the hydrazine reduction is 40 to 80°C.

Both fluid bed and fixed bed operations for the reduction are possible.

The resulting doped carbon blacks have been investigated. It has been found that the nickel is well crystallized (nearly 100 percent). The various samples had nickel contents of between approximately 9 and approximately 50 weight percent.

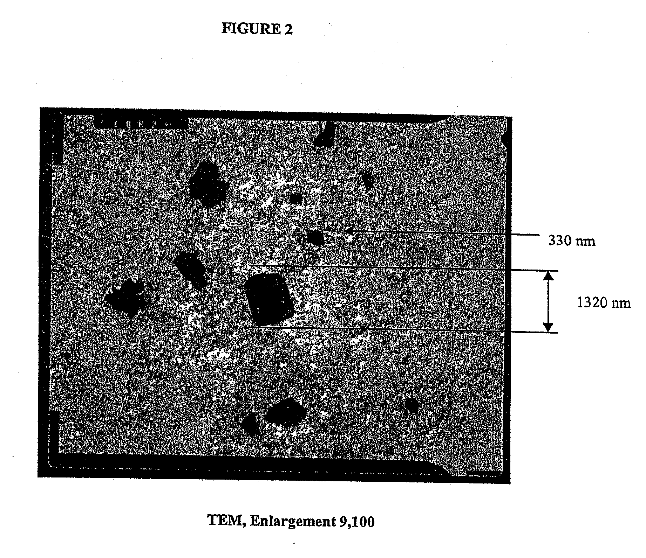

The morphology of the nickel coated carbon black is shown exemplarily in Figure 2. One can see that the nickel single crystals are well developed. The crystallite sizes for the nickel doping ranges between approximately 10 nanometers and approximately 10 micrometers. This is also the crystal size range for the other metals in accordance with the preferred embodiment.

Example 2 - Nickel coating of carbon black using crystallization and reduction.

In this example the carbon black was suspended in the nickel solution at a temperature of 80°C employing a nickel acetate solution (120 g nickel as acetate salt per liter). For higher doping more of the solution was used. The suspension of carbon black in the nickel solution is then progressively cooled to approximately surrounding temperature conditions and the solvent (water or methanol) is evaporated. Once the agitation of the suspension could no longer be carried out efficiently, the drying was finalized in an oven at 100°C.

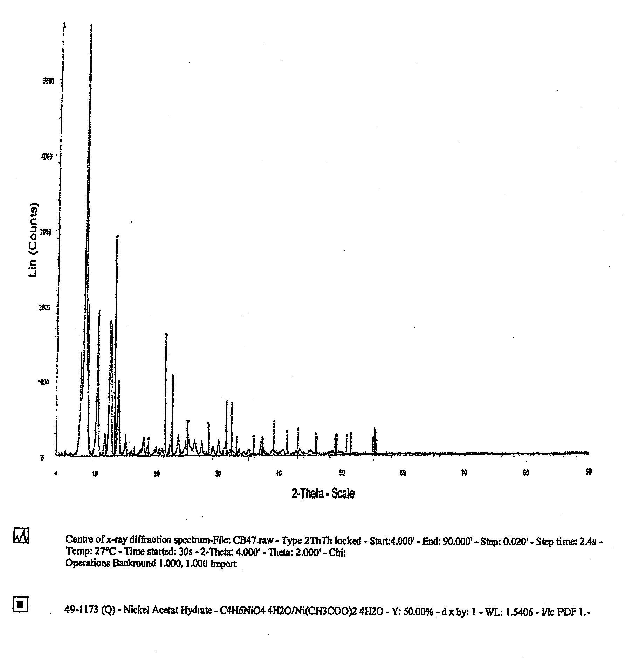

From the x-ray spectrum shown in Figure 3 of the obtained product essentially no crystals of nickel acetate tetrahydrate are found.

The reduction of the coated carbon blacks is carried out as described in example 1 at a temperature of 325°C in hydrogen. The SEM pictures of the product after reduction shows the doping of the carbon black with individual nickel crystals sometimes interconnected with each other. These crystals are located on the surface of the carbon black. This technique permits to obtain monocrystalline nickel.

Example 3 - Coating carbon black with nickel by precipitation and reduction

In this example the carbon black suspension in a nickel solution was subjected to precipitation by adding various precipitants. The reduction of the nickel hydroxides was thereafter carried out at 600°C in hydrogen with a consumption of 20 ml/min hydrogen employing hydrogen in a quantity of 3 times the stoichiometrically required quantity for total reduction of the nickel compound.

a) Precipitation with sodium hydroxide.

The precipitation of the nickel hydroxide was carried out with various concentrations of sodium hydroxide.

Products were obtained having a nickel content of about 8 weight percent to about 70 weight percent, the weight percent again being based on the total weight of the carbon black and the nickel.

b) Precipitation with ammonia.

The carbon black was suspended in a molar solution of nickel chloride during one hour. The quantity of ammonia used corresponded to about 2.7 times the stoichiometrically required quantity. The ammonia was introduced in the form of a 25 weight percent ammonia solution. The pulp was then brought to the temperature of reaction.

During the reaction water is added such as to compensate for the losses by evaporation and to maintain a constant volume of the solution. The product is washed and filtered. Care was taken to wet the carbon black completely with the solution prior to the precipitation step.

In these runs the nickel compound was precipitated using ammonia. Very fine granules of nickel were obtained after reduction. The ammonia was employed generally in a molar ratio of ammonia to Ni between 1/1 and 6/1.

The resulting product contained a precipitate of approximately 80 percent of the initially present nickel. The average granule size was in the range of 100 nm to 150 nm and the chlorine content less than 1 weight percent. The coated carbon black had a nickel contents which varied from 5.2 to over 85 weight percent.

The results and some of the operating conditions for the precipitation with ammonia are shown in the following Table.

| Run | Volume of solution (ml) | Dilution pulp (g CB /l) | Duration of stripping (h) | Temperature °C | Comments | Yield of precipitation % | Nickel content (% weight) |
|---|---|---|---|---|---|---|---|
| ICB48 | 500 | 40 | 3 | 90 | reactor closed and washing | 85 | 30.7 |
| ICB52 | 600 | 60 | 12 | 60 | washing | 65 | 23.5 |
| ICB55 | 600 | 60 | 12 | 75 | washing | 76 | 5.2 |
| ICB69 | 3850 | 16 | 12 | 61 | no additives | 59 | 71 |
| ICB74 | 3850 | 16 | 12 | 60 | no additives | 64 | 72.7 |
| ICB75a | 3850 | 16 | 2*5 | 60-75 | stepped-up temperature T° | 74 | 71.25 |
| ICB75b | 3850 | 16 | 2*5 | 60-85 | stepped-up temperature T° | 87 | 74.33 |

(continued)

| Run | Volume of solution (ml) | Dilution pulp (g CB /l) | Duration of stripping (h) | Temperature °C | Comments | Yield of precipitation % | Nickel content (% weight) |
|---|---|---|---|---|---|---|---|
| ICB75c | 3850 | 16 | 3*4 | 60-75-85 | stepped-up temperature T° | 83 | 75.83 |
| ICB78 | 3850 | 8 | 12 | 60 | pre-doped carbon black | 59 | 85.33 |
| ICB79 | 3850 | 16 | 24 | 60 | Tween80[1] | 65 | 63.7 |
| ICB81 | 3850 | 16 | 12 | 60 | CBO[2] | 57 | 71.1 |
| ICB83 | 3850 | 16 | 24 | 60 | CPC[3] | 65 | 69.4 |
| ICB86 | 3850 | 16 | 12 | 60 | E350gr[4] | 64 | 47 |

[1] Tween 80 N-cetylpyridine (chloride) is commercially obtained from Sigma Aldrich
[2] CBO oxidised carbon black ENSACO 250 (Erachem) 5h/90°C in $HNO_3$
[3] CPC is N-cetylpyridine (chloride) from Sigma Aldrich
[4] E350gr ENSACO 350 carbon black from Erachem

c) Precipitation with urea

In the next runs urea was employed to precipitate the nickel compound on the carbon black the carbon black is suspended in a solution of nickel salt as before.

The urea was introduced into the suspension of carbon black in the nickel solution by employing an aqueous solution of urea having a urea concentration of 1 to 3 M. The operating conditions for these runs using urea as the precipitant are shown in the following table.

| Run | Ni salt | V$_{sol}$Solution volume (ml) | Nickel Concentration | | Carbon black content (gCB/l) | MOlar ratio urea/nickel | Stripping duration (h) | temperature (°C) | η Precipitation (%) | Carbon black after washing | |
|---|---|---|---|---|---|---|---|---|---|---|---|
| | | | Initial (g/l) | Final (g/l) | | | | | | Nickel content (%w) | Anioncontent (%w) |
| ICB54 | NiSO$_4$ | 600 | 58 | 14.5 | 66 | 1.7 | 48 | 85 | 75 | 25.34 | 11.15 |
| ICB57 | NiCl$_2$ | 600 | 57.5 | 22.5 | 66 | 1.7 | 48 | 85 | 61 | 22.67 | 3.95 |
| ICB77 | NiSO$_4$ | 4000 | 60.9 | 21.8 | 15 | 1.7 | 70 | 80 | 65 | 38.8 | 18.4 |

The structure of the nickel coated carbon black was comparable in these runs to the one obtained in earlier runs. Small monocrystalline nickel crystals were attached to the carbon black base. The size of the crystals appeared somewhat more uniform and in the range of 10 to 500 nanometers.

Example 4 - Nickel doping by an electroless plating methods

a.) In this example the carbon black (Ensaco 250G) was subjected to a treatment in a nickel solution under conditions similar to classic electroless plating. The composition of the solution used for this purpose shown in the following table

| | |
|---|---|
| Nickel chloride | 32 g/l |
| Nickel sulfate | 13 g/l |
| Nickel hydrogen citrate | 11,4 g/l |
| Sodium hydrophosphite | 73 g/l |
| Ammonium chloride | 100 g/l |
| Led nitrate | 2,4 g/l |

The carbon black was suspended in this electroless plating bath at room temperature. The thus obtained suspension is thereafter heated to 80°C. The conditions were chosen to provide 10 g or carbon black per liter of plating solution. At the end of the reaction the suspension is filtered and the filter cake is washed. The specific conditions as well as compositions are shown in the following table together with the results.

| Run | Doping | | Operating conditions | | Temperature °C | |
|---|---|---|---|---|---|---|
| | Sn (wt/%) | Pd (wt/%) | Temp (°C) | Duration (min) | Nickel content on carbon black (wt/%) | |
| 42 | 2,1 | 0,52 | 20-80 | 45 | 38,58 | Decomposition of the bath |
| 45 | 2,1 | 0,52 | 20-80 | 60 | 1,7 | |
| 46.1 | 4,89 | 1,18 | 35-85 | 60 | 1,38 | |
| 46.2 | 4,89 | 1,18 | 30-67 | 60 | 44,95 | Decomposition of the bath |
| 48.1 | 4,89 | 1,18 | 50 | 100 | 48,95 | Decomposition of the bath |
| 48.2 | 4,89 | 1,18 | 40 | 90 | 4 à 33 | Decomposition of the bath |
| 48.3 | 4,96 | 1,18 | 40 | 150 | 2,22 | |
| 48.4 | 4,96 | 1,18 | 45 | 380 | 2 | |
| 50 | 4,96 | 1,18 | 40 | 2880 | 22,75 | Decomposition of the bath |
| 54 | 4,96 | 1,18 | 40 | 155 | 44,06 | Decomposition of the bath |
| 57[5] | 2,07 | 0,67 | 40 | 80 | 44,2 | Decomposition of the bath |
| 59[6] | 2,07 | 0,67 | 40 | 300 | 21,6 | Decomposition of the bath |

[5] Suppression of led nitrate (inhibitor of the reaction)
[6] The electroless solution has been diluted 3-fold

The results show that the high nickel doping is achieved whenever one had a decomposition of the electroless bath. This is therefore one method of producing
nickel doped carbon black employing electroless plating bath suspending carbon black therein and bringing this bath thereafter to decomposition conditions. Thereby high nickel contents are achievable.

The nickel coated carbon blacks with these electroless plating solutions do contain some lead, particularly up to a few, preferably less than 1 weight percent.

b.) Further runs of electroless plating have been carried out using a polyol bath. In an oil submersed receptacle 400 ml of ethylene glycol are heated to 100°C. 66 g of nickel acetate, 6 g of carbon black (ENSACO 250G) have been added. The mixture is stirred and heated to a temperature of 190°C. The reactor receptacle was provided with a reflux to reduce losses of the solvent. The reaction was stopped after the solution changed from a green to a maroon colour approximately after 4 hours. At the end of the reaction the suspension is filtered and the filter cake is washed. The nickel doped carbon black was recovered.

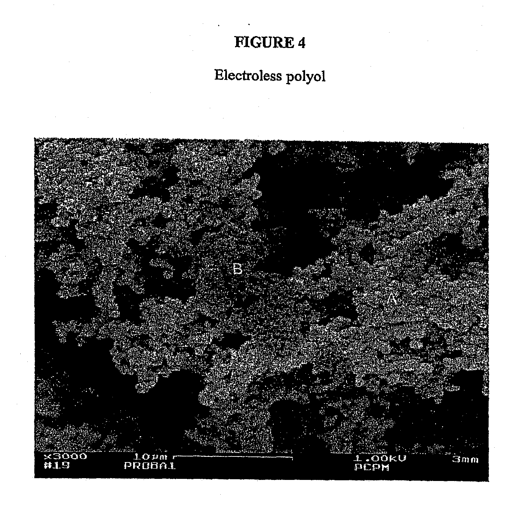

An SEM of a carbon black particle containing a fairly large magnetic nickel particle is shown in Figure 4. The nickel particle has been labeled "B".

As a nickel source nickel acetate and nickel hydroxide are preferably used. A certain quantity of sulfuric acid can be used to increase the solubility of the nickel hydroxide.

Example 5 - Operating examples for the production of doped carbon black for ferromagnetic applications, EMI shielding and magneto rheological materials

*A. Carbon black 38%, Nickel 62% obtained*

Impregnation of $NiCl_2$ on carbon black Ensaco 250:

-    Solution $NiCl_2$ + Ensaco 250 mixing at room temperature
-    Filtration
-    Drying at 100°C
-    Reduction under $H_2$ at 600°C

*B. Carbon black 35%, Nickel 65%* The same as A, impregnation at 70°C

-    Solution $NiCl_2$ + Ensaco 250 mixing at 70°C
-    Filtration
-    Drying at 100°C
-    Reduction under $H_2$ at 600°C

*C. Carbon black 65%, Nickel 35%*

Impregnation Nickel acetate on carbon black Ensaco 250

-    Solution Ni acetate + Ensaco 250 mixing at room temperature
-    Filtration
-    Drying at 100°C
-    Reduction under $H_2$ at 325°C

*D. Carbon black 25%, Nickel 75%*

Crystallisation Nickel acetate on carbon black Ensaco 250

-    Solution Ni acetate + Ensaco 250 mixing at 70°C
-    Drying at 100°C
-    Reduction under $H_2$ at 310°C

*E. Carbon black 25%, Nickel 75%*

Precipitation $NiCl_2$ on carbon black Ensaco 250 with NaOH

- Solution NiCl$_2$ + Ensaco 250 in NaOH mixing at room temperature

- Filtration

- Washing H$_2$O

- Drying at 100°C

- Reduction under H$_2$ at 600°C

*F. Carbon black 30%, Nickel 70%*

Precipitation NiCl$_2$ on carbon black Ensaco 250 with NH$_3$

- Solution NiCl$_2$ + Ensaco 250 in NH$_3$ mixing at 80°C

- Filtration

- Washing H$_2$O

- Drying at 100°C

- Reduction under H$_2$ at 600°C

*G. Carbon black 37%, Nickel 63%*

The same as F plus the addition of a surfactant - Tween80 for the precipitation or N-cetylpyridine)

*H. Carbon black 31%, Nickel 69%*

The same as F plus the addition of a surfactant - N-cetylpyridine for the precipitation or N-cetylpyridine)

*I. Carbon black 15%, Nickel 85%*

Double precipitation NiCl$_2$ on carbon black Ensaco 250 with NH$_3$

- Solution NiCl$_2$ + Final product of F in NH$_3$ mixing at 60°C

- Filtration

- Washing H$_2$O

- Drying at 100°C

- Reduction under H$_2$ at 600°C

*J. Carbon black 30%, Nickel 70%*

Precipitation NiSO$_4$ on carbon black Ensaco 250 with urea

- Solution NiSO$_4$ + carbon black Ensaco 250 with urea mixing at 80°C

- Filtration

- Drying at 100°C

- Reduction under $H_2$ at 950°C

*K Carbon black 15%, Nickel 85%*

Electroless Nickel acetate on carbon black Ensaco 250 with Ethylene glycol

- Solution Nickel acetate + Ensaco 250 + Ethylene glycol mixing at 190°C in closed environment

- Filtration

- Washing

- Drying

*L. Carbon black 40% Nickel 60%*

Impregnation of $NiCl_2$ on carbon black Ensaco 350

- Solution $NiCl_2$ + Ensaco 350 mixing at room temperature

- Filtration

- Drying at 100°C

- Reduction under $H_2$ at 600°C

Example 6

Runs for making metal coated carbon black for catalyst applications for use in carbon nano particles production reactors, in particular plasma reactors

*A. Carbon black 93%, Nickel 7%*

Impregnation Nickel acetate on carbon black Ensaco 250

- Solution Nickel acetate + Ensaco 250 mixing at room temperature

- Filtration

- Drying at 100°C

- Reduction under $H_2$ at 600°C

*B. Carbon black 95%, Nickel 5%*

The same as A, with thermal treatment under Nitrogen at 500°C

*C. Carbon black 92%, Cobalt 8%*

Impregnation Cobalt acetate on carbon black Ensaco 250

- Solution Cobalt acetate + Ensaco 250 mixing at room temperature

- Filtration

- Drying at 100°C

- Reduction under $H_2$ at 600°C

*D. Carbon black 94%, Nickel 3%, Cobalt 3%*

Impregnation Nickel acetate plus Cobalt acetate on carbon black Ensaco 250

- Solution Nickel acetate + Cobalt acetate + Ensaco 250 mixing at room temperature

- Filtration

- Drying at 100°C

- Reduction under $H_2$ at 600°C

*E. Carbon black 94%, Yttrium 1%, Nickel 5%*

Impregnation Yttrium acetate + Nickel acetate on carbon black Ensaco 250

- Solution Yttrium acetate + Nickel acetate + Ensaco 250 mixing at room temperature

- Filtration

- Drying at 100°C

- Reduction under $H_2$ at 600°C

Example 7 - Polypropylene-carbon black-blend

Polypropylene was blended in a Brabander with the metal coated carbon black at 200°C and shaped into sample plates of 20 x 50 x 2 mm for conductivity measurements. In addition disks of approximately 130 mm of diameter were shaped for coaxial measurement. In the following table the measurement results are shown. The ratio of the mass of carbon black (without nickel) to the mass of polypropylene plus carbon black is 0.2 in all the runs.

| | | Carbon black | | Composite | |
|---|---|---|---|---|---|
| | Technique coating | Nickel content (Weight percent) | | Nickel content (Weight percent) | Resistivity ($\Omega$.cm) |
| PP1 | un-doped | 0 | | 0 | 2.76 |
| PP4 | Impregnated with nickel chloride | 9.9 | | 2.1 | 2.9 |
| PP6 | Impregnated with nickel chloride | 25.6 | | 6.4 | 3.13 |
| PP19 | Impregnated with nickel chloride | 46 | | 16 | 2.6 |
| PP26 | Impregnated with nickel chloride | 43.6 | | 14.2 | 9 |
| PP27 | Crystallization with nickel acetate | 73.6 | | 30 | 3.65 |
| PP28 | Precipitation NaOH-$NiCl_2$ | 73.4 | | 30 | 3.25 |
| PP29 | Precipitation $NH_3$-$NiCl_2$ | 72 | | 28.5 | 2.1 |
| PP30 | Precipitation $NH_3$-$NiCl_2$ | 72.7 | | 29.3 | 2.7 |

As can be seen from the results, the conductivity follows in a complex manner from the nickel content. It appears as if neither a continuos nickel phase nor a continuous carbon black phase has been established in the composites at the given concentrations.

The samples of this example of the composite can be used for composites having magnetic properties and shielding properties.

In this example the HF-attenuation of materials of the invention is determined. The samples to be compared were:

Sample 1:  40g carbon black Ensaco 250
60 g polypropylene

Sample 2:  160 g coated carbon black (75% Ni)
60 g polypropylene

The ratio carbon black/polypropylene is the same for the two samples, name 2/3.

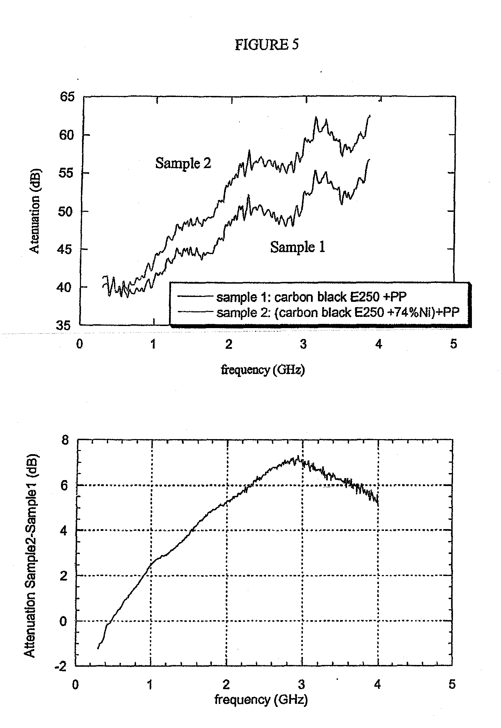

The blend was formed into samples and the attenuation was measured in accordance with ASTM D4395-99. The attenuation plotted against the measuring frequency is shown in Fig. 5.

The lower line in the Figure is the one without nickel, the upper line is the one with nickel. The result shows that the nickel doped carbon black accomplishes an increase in attenuation of 1 to 7 dB in the GHz frequency range.

## Claims

1. A carbon black composition comprising:

   - carbon black, graphite, or any carbon structure
   and
   - a metal component selected from the group consisting of ferromagnetic Ni, Fe, or Co, optionally in combination with one or more metals.

2. The carbon black composition according to claim 1, containing at least 2 weight percent of said metal component based on said carbon black composition.

3. The carbon black composition according to claims 1 or 2, wherein said metal component contains over 90 weight percent, preferably over 99 weight percent, based on said carbon black composition as 100 weight percent, of Ni, Fe, Co.

4. The carbon black composition according to any one of the preceding claims, wherein said metal component is present in a range of 0.5 to 95 weight percent based on the carbon black composition as 100 weight percent.

5. The carbon black composition according to any one of claims 1 to 4, consisting essentially of carbon black and nickel and/or iron and/or cobalt.

6. A process to produce a carbon black composition according to any one of the claims 1 to 5 comprising:

   a) impregnating carbon black with a compound (or compounds) of said metal component, and
   b) drying the impregnated carbon black and reducing the metal compound(s) to form said carbon black composition.

7. The process in accordance with claim 6, wherein said carbon black is impregnated with said metal compound(s) by contacting the carbon black in a slurry containing dissolved metal compound.

8. The process in accordance with claim 6, wherein said carbon black is impregnated with said metal compound(s) by precipitation of said metal compound onto the carbon black particle.

9. The process to produce carbon black compositions according to any one of claims 1 to 5 comprising:

   electroless plating the carbon black with the metal, the carbon black having seeds or catalytic sites on its surface to achieve the electroless plating of the metal on the carbon black surface.

10. The process according to any one of the claims 6 to 9, further comprising:

a) washing the carbon black composition; and

b) drying the carbon black composition.

11. The process according to any one of claims 6 to 10, further comprising heat treating of said carbon black composition in a fluidized or fixed bed operation employing a stream of hot gas.

12. The process according to any one of the claims 6 to 11, comprising separating the carbon black composition particles into at least two fractions differing by their response to a magnetic field by subjecting these carbon black composition particles to a magnetic field in order to separate them.

13. A blend of a polymer and carbon black, **characterized by** comprising a carbon black composition according to any one of claims 1 to 5.

14. The blend according to claim 13, wherein said polymer is a thermoplastic polymer, in particular an olefin polymer, more specifically an ethylene or propylene polymer or copolymer, a polyamide, a polycarbonate, in particular PC, ABS, PBT, PES or a polyurethane,.

15. The blend according to claim 12 comprising a rubber, in particular a silicon rubber or a hydrocarbon rubber.

16. The blend according to any one of the claims 13 to 15, wherein said carbon black composition is present in a weight percentage range of 1 to 60 percent, based on the polymer and the carbon black composition together as 100 weight percent.

17. Use of a carbon black composition according to any one of claims 1 to 5 as a catalyst or nucleus source in a process for producing nanometer size carbon materials, in particular nanotubes, in particular by injecting the carbon black composition into a carbon forming reaction zone.

18. Use according to claim 17, wherein a carbon black composition containing nickel or cobalt is employed.

19. Use of a blend of polymer and carbon black as defined in any one of the claims 13 to 18, wherein the carbon black composition of the blend contains a ferromagnetic metal component, in a magnetic field.

20. Use in accordance with claim 19, wherein the magnetic field exerts a force onto the carbon black composition and thus onto the blend such as to either move the blend or deform the blend.

21. Use in accordance with claim 20, wherein the magnetic field changes at least one property, in particular a mechanical property, rheological or viscoelastic property of the blend.

22. Use of a blend in accordance with claim 19 in a medical valve application, in particular a blood vessel valve application.

23. Use in accordance with claim 22 in products subject to simultaneous effect of elastic deformation and magnetic field.

24. Use of a blend of polymer and carbon black as defined in claim 16 for electromagnetic shielding.

FIGURE 1

EP 1 852 474 A2

FIGURE 2

330 nm

1320 nm

TEM, Enlargement 9,100

19

Centre of x-ray diffraction spectrum-File: CB47.raw - Type 2ThTh locked - Start:4.000' - End: 90.000' - Step: 0.020' - Step time: 2.4s - Temp: 27°C - Time started: 30s - 2-Theta: 4.000' - Theta: 2.000' - Chi:
Operations Backround 1.000, 1.000 Import

49-1173 (Q) - Nickel Acetat Hydrate - C4H6NiO4 4H2O/Ni(CH3COO)2 4H2O - Y: 50.00% - d x by: 1 - WL: 1.5406 - I/Ic PDF 1.-

**FIGURE 4**

Electroless polyol

21

FIGURE 5

**EP 1 852 474 A2**

## REFERENCES CITED IN THE DESCRIPTION

**Patent documents cited in the description**

- US 4447506 A
- US 4137373 A
- US 5759944 A